# EUROPEAN PATENT SPECIFICATION

(11) **EP 0 662 250 B1**
(45) Date of publication and mention of the grant of the patent: **14.02.2001**
(21) Application number: 93901174.8
(22) Date of filing: 18.12.1992
(51) Int. Cl.: H01M 2/16, H01M 10/24, H01M 10/26

(54) **MULTI-PLY BATTERY SEPARATOR AND PROCESS OF FORMING**
SEPARATOR FÜR MEHRSCHICHTBATTERIE UND HERSTELLUNGSVERFAHREN
SEPARATEUR DE BATTERIE MULTI-COUCHE ET PROCEDE DE PRODUCTION

(30) Priority: 20.12.1991 US 808591; 20.12.1991 US 808592
(43) Date of publication of application: 12.07.1995
(73) Proprietor: Celgard Inc., Burlington, Massachusetts 0183 (US)
(72) Inventor: TROFFKIN, Howard, Julian, Potomac, MD 20854 (US); REIN, Burton, Maxwell, Mountain Lakes, NJ 07046 (US); SPOTNITZ, Robert, Mark, Catonsville, MD 21228 (US); GIOVANNONI, Richard, Thomas, Columbia, MD 21045 (US); GUO, Yihong, Columbia, MD 21045 (US)
(74) Representative: Pendlebury, Anthony
(86) International application number: US9210973
(87) International publication number: WO9313565

(56) References cited:
- EP-A- 0 201 875
- WO-A-91/19326
- US-A- 4 731 304
- US-A- 4 741 979
- US-A- 4 973 532
- CHEMICAL ABSTRACTS, vol. 115, no. 16, 21 October 1991, Columbus, Ohio, US; abstract no. 163086q,
- PROGRESS IN BATTERIES & SOLAR CELLS, 1990, BRUNSWICK, OHIO, US pages 48 - 57 D. HOFFMAN ET AL. 'COMPARISON OF POLYPROPYLENE AND POLYETHYLENE CELGARD(R) MICROPOROUS MEMBRANE'
- PROGRESS IN BATTERIES & SOLR CELLS, 1990, BRUNSWICK, OHIO, US pages 58 - 66 R. FLEMING ET AL. 'CELGARD(R) MICROPOROUS MEMBRANES AS BATTERY SEPARATORS'
- PATENT ABSTRACTS OF JAPAN vol. 14, no. 163 (E-910) (4106) 29 March 1990 & JP-A-02 021 599 (NITTO DENKO CORP.)

## Description

### BACKGROUND OF THE INVENTION

The subject invention is directed to sheet products which are useful as separators in batteries, in particular, separators in lithium batteries to prevent the occurrence of overheating and thermal-runaway.

Storage batteries have at least one pair of electrodes of opposite polarity and, generally, have a series of adjacent electrodes of alternating polarity. The current flow between these electrodes is maintained by an electrolyte which can be acid, alkaline or substantially neutral depending on the nature of the battery system. Separators are located in the batteries between adjacent electrodes of opposite polarity to prevent direct contact between the oppositely charged electrode plates while freely permitting electrolytic conduction. The separator is normally in the form of a thin sheet or film or in certain designs can be in the form of an envelope surrounding each electrode plate of one polarity. It is generally agreed that separators should be (a) thin and light weight to aid in providing a battery of high energy density, (b) resistant to degradation and instability with respect to the battery components with which it is in contact, (c) capable of exhibiting a high degree of electrolytic conductivity (low electrolytic resistance) and (d) capable, where appropriate, of inhibiting formation and growth of dendrites in battery systems.

Lithium batteries have distinct advantages over other storage batteries. These batteries are capable of providing much higher power storage densities than other types of batteries, excellent shelf life, high energy density (power capability per unit weight) due to the low atomic weight of lithium metal, and high potential for forming a battery in conjunction with positive electrodes far removed from the lithium electrode in electromotive series. The battery can be formed in any conventional physical design: cylindrical, rectangular or disc-shaped "button" cells, and are normally of a closed cell configuration. Such batteries are generally composed of a negative lithium electrode, a positive electrode and a non-aqueous electrolyte. The negative electrode is conventionally lithium metal or its alloy on a support, such as a nickel coated screen. Positive electrodes of various types have been suggested, including metal oxides, such as manganese dioxide or transition metal sulfides such as sulfides of cobalt, nickel, copper, titanium, vanadium, chromium, cerium and iron. These may be used singly or as mixtures and may further contain other metal ions, such as alkali metal ions. The positive electrode may further contain carbon and a current collector. The electrolyte is formed of a non-aqueous solvent containing a lithium salt. For example, solvents may be acetonitrile, tetrahydrofuran, propylene carbonate, and various sulfones. The lithium salts may be lithium perchlorate, iodide or hexafluroarsenate and the like. An additional, normally passive, component of the battery is a separator membrane located between plates of opposite polarity to prevent contact between such plates while permitting electrolytic conduction.

Separators conventionally used in present battery systems are formed of polymeric films which when placed in an electrolyte or electrolyte system, are capable of exhibiting a high degree of conductivity while being stable to the environment presented by the battery. The films may be macroporous or microporous to thus permit transportation of electrolyte. Examples of such separators include polypropylene sheet which has been stretched and annealed to provide microporosity in the sheet. Such sheets, as disclosed in U.S. Patents 3,426,754; 3,558,764; 3,679,538; 3,801,404 and 4,994,335, are normally highly oriented and shrink when subject to heat. Other examples are filled polymeric sheets such as those disclosed in U.S. Pat. Nos. 3,351,495 and 4,287,276 in which the electrolyte is capable of passing through the separator through microporous channels and by the wicking of the filler.

Due to the reactivity of lithium, a major problem encountered with these batteries involves overheating of the cell due to improper use of the cell, e.g. placed in inverted position causing plating out of electrolyte onto an anode; contact between electrodes of opposite polarity such as by dendrite formation or shrinkage of separator; formation of high surface spongy lithium which exothermally reacts with the solvent-electrolyte; as well as other known conditions. Such overheating tends to cause thermal runaway and potentially explosive effects as the system continues to act in its defective mode. This must be controlled to provide a battery having commercial acceptability. One method of controlling or preventing thermal runaway is to have the battery casing connected to a sensor which shuts down the electrical system of the apparatus when overheating is detected. This method requires additional electrical circuitry and associated devices and is unable to make early detection of internal cell overheating and preventive effort.

Conventional polymeric films employed as separators lithium batteries are generally not capable of preventing any uncontrolled overheating. Some separator films are inert to heat and, therefore, do not trigger any preventative mechanism. Other presently used separators, such as microporous polyolefins, when subjected to elevated temperatures exhibit dimensional instability and/or degradation permitting contact between large sections of electrodes of opposite polarity which only accelerates the thermal-runaway of a battery.

Recently U.S. Patent 4,650,730 disclosed a sheet product which is useful as a battery separator and has the capability of drastically reducing its porosity at a predetermined elevated temperature. Thus, the separator is capable, upon detection of internal overheating of shutting-down the battery's system by becoming a barrier to the passage of ions between electrodes of opposite polarity. This separator is composed of a sheet product having at least two microporous plies with one ply being a substantially unfilled microporous sheet capable of transforming to a non-porous sheet at a predetermined temperature while the second ply is a highly filled microporous sheet which is substantially stable at that temperature. U.S. Patent 4,650,730 (the teachings of which are expressly incorporated herein by reference) forms its sheet product by methods which include formation of individual sheets, bonding them together and providing either multiple extraction steps or a combination of extraction and processing steps. These multi-step methods provide a disincentive to forming the sheet product as a cost-effective means to provide safety to lithium battery designs.

The present invention is directed to an effective and efficient method of forming a multi-ply microporous sheet product capable of having at least one ply of the sheet product transform to a substantially non-porous multi-ply product at a predetermined elevated temperature while retaining the length and breadth dimensions of the product.

### SUMMARY OF INVENTION

The present invention is directed to a multi-ply sheet product composed of at least one first ply and at least one second ply which are, respectively, composed of polymeric compositions having different rheological properties and to effective methods for forming such a multi-ply sheet product useful as a shut-down battery separator.

The invention resides in a process of forming a microporous multi-ply sheet product comprising
a) forming a first polymer composition composed of an inert first polymer and a first extractable material which is miscible with the first polymer at processing temperatures;
b) forming a second polymer composition composed of an inert second polymer and a second extractable material which is miscible with the second polymer at processing temperatures; said first and second extractable materials being miscible in a common solvent;
c) forming an initial sheet product having at least one ply composed of the first polymer composition and at least one ply composed of the second polymer composition;
d) contacting the initial sheet product with the common solvent to substantially remove the first and second extractable materials therefrom; and
e) recovering a final sheet product having at least two plies comprising
   1) at least one first ply in the form of a continuous microporous sheet of a length and breadth and of less than 0.025cm (10 mils) thickness and having pores of an average pore size of from about 0.005 to 50µm (microns) in diameter occupying at least about 20 volume percent of said sheet, said sheet composed of a substantially unfilled first polymer composition;
   2) at least one second ply in the form of a continuous microporous sheet of substantially the same predetermined length and breadth dimensions as the first ply and of less than 0.025cm (10 mils) thickness and having pores of an average pore size of from about 0.005 to 50µm (microns) in diameter occupying at least about 20 volume percent of said sheet, said sheet composed of a substantially unfilled second polymer composition; each of said first and second ply being bonded together to provide a unitary sheet product which is microporous across its thickness and which is capable of maintaining its length and breadth dimension and the viscosity of the first polymer composition and the second polymer composition are ultra-high and substantially the same at a temperature of from ambient to about 70°C while, at a transformation temperature of from about 80°C to 150°C, said first polymer composition has a sufficient decrease in viscosity to exhibit flow sufficient to collapse the pores therein and cause sheet (a) to be substantially non-porous while said second polymer composition maintains its ultra-high viscosity for at least 10°C above the transformation temperature.

The invention also resides in an alternative process of forming a microporous multi-ply sheet product comprising
a) forming a first polymer composition and a second polymer composition; each of said compositions composed of components which are substantially inert with respect to a battery's environment for which said sheet product will be used.
b) forming an initial sheet product having at least one first ply composed of the first polymer composition and at least one second ply composed of the second polymer composition; wherein each of said first ply and said second ply are coextensive in length and breadth and are bonded together, and said first polymer composition exhibits a viscosity profile such that its viscosity is ultra high and substantially the same as that of the second polymer composition at temperatures of up to about 80°C and has a decrease in viscosity to exhibit flow sufficient to collapse the pores therein at a transformation temperature within the range of from about 80°C to 150°C while the second polymer composition maintains its ultra high viscosity for at least 10°C above said transformation temperature;
c) imparting porosity to the initial sheet by subjecting said initial sheet to stretching and annealing; and
d) recovering a final sheet product having at least two plies comprising
   1) at least one first ply in the form of a continuous microporous sheet of a predetermined length and breadth and of less than 0.025 cm (10 mils) thickness and having pores of an average pore size of from about 0.005 to 50µm (microns) in diameter occupying at least about 20 volume percent of said sheet, said sheet composed of a substantially unfilled first polymer composition;
   2) at least one second ply in the form of a continuous microporous sheet of a length and breadth and of less than 0.025 cm (10 mils) thickness and having pores of an average pore size of from about 0.0005 to 50µm (microns) in diameter occupying at least 20 volume percent of said sheet, said sheet composed of a substantially unfilled second polymer composition; each of said first and second ply being bonded together to provide a unitary sheet product which is microporous across its thickness and which is capable of maintaining its length and breadth dimension.

The invention also resides in a microporous milti-ply sheet product obtainable by the above processes of the invention, and to the use of such product as a battery separator.

### DETAILED DESCRIPTION

The present invention provides an effective and efficient method for forming a multi-ply sheet product. The present method requires first forming a multi-ply, non-porous polymeric initial sheet product and then inducing porosity therein, as fully described herein below.

For purposes of clarity, some of the terms used herein and in the appended claims to describe the instant invention are defined below.

A "sheet" is intended to define a structure having large length and breadth dimensions with respect to its thickness and the thickness is less than about 0.025 cm., preferably less than about 0.005 cm.

A "ply" is sheet-like material formed from a substantially uniform polymeric composition and is a component of an initial sheet product and a final sheet product, as defined below.

An "initial sheet product" is a substantially nonporous multi-ply structure having (a) at least one ply composed of a polymeric composition and (b) at least one ply composed of a different polymeric composition from at least one ply (a).

A "sheet product" is a microprous, multi-ply structure having (a) at least one ply which is microporous, composed of a polymeric composition and capable of transforming to a substantially non-porous ply at a predetermined transformation temperature and (b) at least one ply which is microporous, composed of a different polymeric composition from the at least one ply (a) and capable of maintaining its dimensions at temperatures of from ambient to at least about 10°C, preferably at least about 20°C greater than the transformation temperature of ply (a); and all plies are bonded together so as to substantially maintain the length and breadth dimension of the sheet product structure.

The term "first", when used, is intended to modify terms to reference them to ply (a) and components forming same of initial sheet product and of sheet product.

The term "second", when used, is intended to modify terms to reference them to a ply (b) and components forming same of initial sheet product and of sheet product.

The term "polymeric composition" refers to a thermoplastic polymer which may contain, substantially uniformly distributed therein, other materials such as plasticizers, antioxidants, dyes, colorants, extractable materials, e.g., liquids (in initial sheet), and the like. The polymeric compositions found useful in the present invention are substantially free of solid particulate fillers.

The term "fluidity" is intended to refer to the ability of a polymer composition to flow, that is to have polymer molecules of the composition capable of sliding over one another. The ability will depend upon the polymer's particular configuration, i.e. linear or branched, crystalline or amorphous, degree of crosslink, temperature of the composition and the like. The fluidity can be measured by conventional techniques such as using Standard Load Melt Index of High Load Melt Index tests (ASTM D-1238-57T) modified to be measured at varying temperatures.

The term "viscosity" is intended to refer to the ability of a polymer composition to resist flow. Viscosity is inversely related to fluidity.

A "separator" is a component of a battery, in particular a storage battery, by which the component maintains a separation between adjacent electrode plates of opposite polarity. A separator of the present invention is formed from a sheet product and may be in various configurations such as, flat, ribbed, corrugated sheet product in the form of a membrane or envelope capable of maintaining separation between electrodes.

The present process is capable of providing a microporous, multi-ply sheet product capable of exhibiting nonporosity of at least one ply thereof at a predetermined temperature in an effective and efficient manner. The process entails forming an initial sheet product. The initial sheet product is a multi-ply structure having at least one first ply composed of a first polymer composition and at least one second ply composed of a second polymer composition.

The sheet products of the present invention utilize first and second polymeric compositions which have different rheological properties, e.g., profiles of viscosity and flow, with respect to temperature. These properties can be readily determined by known methods, such as by a modified Standard Load Melt Index or High Load Melt Index test, made over a range of temperature, particularly a range of from 80° to 150°C, or by differential scanning calorimetry, or thermomechanical analysis. The first and second polymers must be selected from polymers having different profiles of viscosity and flow with respect to temperature. As indicated earlier, it is desirable that the transition temperature (temperature at which the polymer exhibits high flow) of the first polymer composition be at least 10°C, and preferably at least 20°C below that of the second polymer.

For example, the viscosity of the composition forming the first ply should be substantially equal to or less than that of the composition of the second ply at all temperatures (i.e., at temperatures from about ambient to the melt temperature of the second polymer). It is understood that both the first and second polymer compositions exhibit very high viscosity at low and moderate temperatures where they are solid materials. At these temperatures, (e.g., ambient to about 70°C) both solid compositions have substantially equal (approach infinite values) viscosities as they do not exhibit any pronounced flow. However, at some predetermined elevated temperatures of from about 80°C or greater, as directed by the application for the sheet product, the ply formed from the first polymeric composition must be capable of having a sufficient change in viscosity (decrease) or related elasticity to exhibit flow and ability to collapse into its pores. This temperature is the transformation temperature of the first polymer composition. At this transformation temperature, the second polymer composition must maintain sufficient high viscosity and thus retain its elastic energy, i.e., show substantially no flow.

The polymeric compositions useful in forming each ply of the multi-ply sheet product of the present invention can be selected from known classes of polymers capable of forming a microporous sheet as, for examples, polyolefins; polysulfones, such as polyarylether sulfones and the like; polyvinyl halides such as polyvinyl chloride, polyvinyl fluoride, polyvinylidene dichloride and the like; polytetrafluoroethylene-propylene copolymers, polyamides, polyphenyleneoxide-polystyrene copolymers, polycarbonates and the like. The polymers used to form the first and second sheets of the multi-ply sheet product are preferably selected from the same class of polymeric material to best provide the properties described above.

A preferred class of polymers are the polyolefins due to their inertness with respect to the other battery components with which they come in contact. The remainder of this description shall illustrate the present invention by combinations of the preferred embodiment wherein polyolefin compositions are used to form the present sheet materials and separators therefrom. It has been found that when forming a product having at least one first ply of an unfilled microporous polyolefin composition which normally exhibits the undesired properties of shrinkage in length and breadth in combination with at least one second polymer of a higher viscosity profile polyolefin composition one unexpectedly attains a product of low transformation temperature while exhibiting and maintaining high dimensional stability. For example, polymers can be selected from polyolefins, such as polyethylene, polypropylene, ethylene-butene copolymers, ethylene hexene copolymers, ethylenemethacrylate copolymers and the like and mixtures thereof. The preferred polyolefin forming the first ply are polyolefin wax, low density polyethylene, low molecular weight, high density polyethylenes and copolymers of ethylene with other α-olefins (especially C₄-C₁₀ alpha-olefins). The α-olefin is present in from 5 to 20 weight percent of the copolymer. The polyolefins should have a weight average molecular weight of from 100,000 to about 5,000,000, preferably the first polymer will be a low weight average molecular weight polymer of from about 100,000 to about 1,000,000 and preferably the second polymer would have a higher weight average molecular weight including ultra-high (greater than about 2,000,000) molecular weight polyolefin (e.g. polyethylene).

The preferred polymers forming the first ply are polyolefins selected from polyethylene, low-density polyethylene, polypropylene, ethylene-butene copolymers, ethylene-hexene copolymers, ethylene-methacrylate copolymers and the like. The first polymer will be chosen to have a low melting point to provide a nonporous first ply at a desired temperature within the range of from 80°C to 150°C and preferably from 80°C to 120°C. The preferred first polymers have low weight average molecular weight of from 100,000 to 1,000,000.

The preferred polymers forming the second ply are polyolefins selected from polyethylene, high density polyethylene, polypropylene, ethylene-butene copolymers, ethylene-hexene copolymers, ethylene-methacrylate copolymers and the like. The second polymer will be chosen to have a melting point which is at least 10°C higher, preferably at least 20°C higher than the transformation of the first polymer. The second polymer preferably has a weight average molecular weight which is higher than that of the first polymer and is selected from greater than 100,000 to 2,000,000, most preferably 200,000 to 5,000,000.

The first polymer/second polymer combination should be chosen so there is a significant lower temperature-fluidity profile for the first ply with respect to the second ply. For example, suitable combinations are low density polyethylene/high density polyethylene; polyethylene/polypropylene/narrow molecular weight polyethylene/broad molecular weight polyethylene; ethylene-butene copolymer (5:1 to 20:1)/polyethylene; ethylene-hexene copolymer (5:1 to 20:1)/polyethylene; ethylene-hexene copolymer (5:1 to 20:1)/polypropylene and the like.

Each ply is formed from a polymeric composition comprising a polymer, as described fully herein below and may, in addition, have uniformly distributed therein plasticizers, stabilizers, antioxidants and the like for said polymer. The polymer composition should contain substantially no particulate filler although small amounts of up to about 15 weight percent, preferably less than 10 weight percent may be contained in the compositions. In one embodiment of the present invention, the first and second polymer compositions used to form the initial sheet product contain extractable material. Further details of this embodiment are discussed later below.

The initial sheet product is formed by simultaneously extruding at least one sheet of first polymer composition and at least one sheet of second polymer composition together. This process step is preferably conducted by coextruding each of the first and second polymer compositions through a single die where they join together such that they form distinct, well-bonded plies to provide the single initial sheet product. The coextrusion can, for example, be performed using conventional feed block dies where each of the melted polymer compositions are combined in a relatively small cross-section before entering the die itself. The preferred manner of simultaneously forming the multi-ply initial sheet product is by coextrusion using a multimanifold internal combining die. In such a system, the first and second polymer compositions (as melt feed stock) enter the die separately and join just before the final die orifice. This system provides for the use of two or more polymer compositions of substantially different flow characteristics while enabling there to be a high degree of ply uniformity and thickness control to produce a thin initial sheet product.

The initial sheet can be formed by blown film technique. The film is initially formed by a coextrusion die having an annular exit port with air or other gas being injected into the center of the initial tube formation to cause expansion of the tube to a prescribed diameter. When the film is cooled it is slit to provide a multi-ply initial sheet product. This technique is used when it is desired to have an initial sheet of substantial width, such as 76.2 to 101.6 cm (30 to 40 inches wide). Alternatively, the initial sheet can be formed by sheet extrusion using a slit dye. In this instance, the width of the sheet will be substantially controlled by the slit dimension.

The multi-ply sheet product of the present invention must be composed of (a) at least one first ply of a predetermined length and breadth and of a thickness of less than about 0.025 cm (10 mils) preferably less than 0.013 cm (5 mils) and most preferably from 0.00025 to 0.005 cm (0.1 to 2 mils). The pores of the sheet must be of sufficient size and amount to permit the resultant sheet product of the present invention to exhibit low electrolytic resistivity, i.e., 500 ohm-cm or less depending on the particular application. It is understood that the thinner the sheet dimensions are, the lower the overall volume percent of the sheet needs to be occupied by the pores to sustain the desired low electrolytic resistance. The pores of the first ply will normally have average pore size of from about 0.005 to about 50 µm (microns) in diameter and the pores normally occupy at least about 20 volume percent and preferably at about least about 40 volume percent of the total volume of the sheet. The first ply is formed of a polymer composition having viscoelastic properties (e.g., viscosity and flow) such that it is capable of transforming to a substantially non-porous sheet at a predetermined transformation temperature (which is normally from 80°C to 150°C, preferably from 80°C to 120°C) when a component of the multi-ply sheet product. The multi-ply sheet product must further be composed of (b) at least one second ply of a predetermined length and breadth and a thickness of less than 0.025 cm (10 mil), preferably less than 0.013 cm (5 mils) and most preferably from 0.00025 to 0.005 cm (0.1 to 2 mils) having average pore size of from about 0.005 to about 50 µm (microns) in diameter wherein the pores occupy at least about 20 volume percent and preferably at least about 40 volume percent of the sheet's volume. The ply (b) is substantially stable (minor shrinkage of less than 10 percent may occur over conventional battery life and can be accommodated for an initial design) in form and dimensions at temperatures ranging from ambient to at least about 10°C., preferably at least 20°C., greater than the transformation temperature of the polymer composition of ply (a). The present multi-ply sheet product is capable of maintaining its length and breadth dimensions at the sheet product's transformation temperature and beyond.

The transformation temperature of a sheet product is the temperature at which the sheet, when in a battery cell, exhibits a large increase in electrolytic resistivity to provide resistivity sufficient to substantially shut down a battery system or a portion of such a system (for example one cell or a localized portion to prevent undesired thermal runaway. Electrolytic resistivity of at least about 1500 ohm-cm is normally sufficient to shut down a battery system although greater or lesser resistance may be sufficient for a particular battery or for a particular application. The transformation temperature substantially coincides with the temperature at which the composition of the first ply exhibits sufficient fluidity and ability to collapse into its pores to provide a substantially non-porous sheet while a component of the sheet product. As mentioned above, this temperature is typically in the range from 80°C to 150°C, preferably from 80°C to 120°C.

The first and second plies are each formed from polymeric compositions. The polymer matrix must be selected from polymers which are inert under the conditions encountered in a battery especially with respect to the electrolyte composition. In addition, each polymer composition must be capable of exhibiting microporosity and must also be capable of being formed into a thin sheet of less than 0.025 cm (10 mils), preferably less than 0.013 cm (5 mils) and most preferably less than 0.005 cm (2 mils). In addition, each polymer composition is a substantially unfilled composition to enhance its capability to form coextruded sheet product.

The polymeric component of each ply forming the sheet product of the present invention must be chosen in a judicious manner so that the polymeric component of the first ply has a significant lower temperature-fluidity profile than that chosen for the second ply at and above the transformation temperature of the first ply. Secondly, the first and second polymers must be compatible to be capable of having the first and second plies formed therefrom adhere to each other. Thirdly, the first and second polymers must be inert with respect to the battery environment for which the resultant sheet product is intended for use. Fourthly, the second polymer composition must be capable of maintaining its high viscosity-fluidity profile up to at least 10°C, preferably at least 20°C, above the transformation temperature of the first polymer composition used to form a sheet. Thus, although the polymers may be chosen from a number of film-forming polymeric materials, they must meet the above criteria. For example, a high density, narrow molecular weight polyethylene (as first polymer)/high density, broad molecular weight distribution polyethylene (as second polymer) combination; a low density polyethylene/high density polyethylene combination; a polyethylene/polypropylene combination; and the like can be used in forming the initial sheet product. In addition, although the polymer may be a homopolymer, each may be chosen from copolymers such as, for example ethylene-butene copolymer/polyethylene; ethylene-hexene copolymer/polyethylene; ethylene-butene copolymer/polypropylene, and the like. The preferred material being the use of copolymers of ethylene-butene or ethylene-hexene copolymers as the first polymer. The choice of first polymer will be dictated by the particular transition temperature of the sheet product. Where low transition temperature (80°C-110°C) sheet product is desired, the first polymer can be chosen from copolymers of ethylene-butene or ethylene-hexene having narrow molecular weight distribution. The preferred second polymer is selected from high density polyethylene or predominantly isotactic (>80%) propylene.

As mentioned earlier in regard to one embodiment of this invention, an initial sheet product is formed from first and second polymeric compositions which contain extractable material. The extractable material should be (1) a liquid at the temperature (usually an elevated temperature of from about 100°C to about 250°C) at which the initial sheet product is formed (e.g. the extrusion temperature when using coextrusion as the forming means); (2) substantially miscible at the forming temperature with the polymer used in forming the same ply; and (3) soluble in a solvent or solvent system which is also a solvent or solvent system for the extractable component of the other plies of the initial sheet product.

The extractable material should be at least 30 percent by weight (preferably at least 50 percent and most preferably at least about 60 percent) of each first polymeric composition and of each second polymeric composition forming an initial sheet product.

The extractable material can be soluble or insoluble in water. Representative of the water-insoluble extractable components are organic esters, such as the sebacates, phthalates, stearates, adipates, and citrates; epoxy compound such as epoxidized vegetable oil; phosphate esters such as tricresyl phosphate; hydrocarbon resin; low molecular weight polymers such as polybutadiene, polystyrene, coumarone-indene resins; and terpene resins; and linseed oil. Illustrative of the water-soluble extractable materials are ethylene glycol, polyethylene glycol, polypropylene glycol, glycerol, and ethers and esters thereof; alkyl phosphates such as triethyl phosphate; polyvinyl alcohol, polyacrylic acid and polyvinyl pyrrolidone. The preferred extractable material to be used when forming the preferred embodiment of this invention (i.e. polyolefin polymer) are aromatic dicarboxylic acid esters of C₃-C₅ alkyl alcohols such as dibutyl phthalate, diisopropyl phthalate, dibutyl isophthalate, and the like and C₆-C₉ alkanyl dicarboxylic acid esters of C₃-C₅ alkyl alcohols, such as dibutyl azelate, diisopropyl azelate, dibutyl sebacate, diisopropyl sebacate, dipentyl sebacate and the like and mixtures thereof.

When the first and second ply of an initial sheet product are formed from polymeric compositions based on olefinic polymers, such as ethylene-butene copolymer/high density polyethylene; ethylene-butene copolymer/ultra high molecular weight polyethylene; ethylene-butene copolymer/polypropylene and the like, the preferred extractable material component used in such first and second polymeric composition are dibutyl sebacate and dibutyl phthalate. Most preferably, the sebacate is used with polyethylene systems and phthalate with polypropylene systems.

As stated above, the first and second polymeric compositions may each contain stabilizers, antioxidants, nucleating agents, wetting agents, colorants and other additives and processing aids as known to those skilled in the art. Representative of the stabilizers include 4,4-thiobis (6-tert-butyl-m-cresol), 2,6-ditert-butyl-4-methylphenol and the like. Representatives of antioxidants include hydroquinone and the like. Representatives of other additives including carbon black which may have high surface area (1000 m²/gm) and the like. Representatives of processing aids include zinc stearate and the like. The additives are normally present in up to about 10% weight percent of the total composition. The processing aids, stabilizers, antioxidants and the like are used in conventional low amounts such as up to about 2 percent. The carbon black additive may be used in up to about 10 percent by weight.

Each first and second polymeric composition is processed separately by conventional methods such as mixing, grinding, milling and the like to provide substantially homogeneous compositions. The compositions are concurrently fed to the initial sheet forming means such as an extrusion apparatus fitted with a coextrusion head and related feed means. The initial sheet product is formed. This initial sheet product is normally a two-ply product having one first ply and one second ply or a three-ply product having one first ply contained between two second plies.

In the embodiment employing polymeric compositions comprising extractable material, the initial sheet product is then subjected to an extraction process to remove the first and second extractable components from the initial sheet product. The extraction of both first and second extractable components are preferably done simultaneously by a single stage extraction. The solvent and extraction conditions should be chosen so that the first and second polymers are essentially insoluble. Numerous extracting solvents are suitable for forming the sheet products of this invention with the particular solvent depending upon the particular component to be extracted. For example, if dibutyl phthalate is used as the first and/or second extractable material solvents suitable to extract it from the multilayer sheet material are chlorinated hydrocarbons, such as trichloroethylene (preferred), tetrachloroethylene, carbon tetrachloride, methylenechloride, tetrachloroethane, and the like. Other suitable solvents include hydrocarbon solvents such as hexane, benzene, petroleum ether, toluene, cyclohexane, gasoline, and the like.

The time of the extraction will vary depending upon the temperature used and the nature of the system. For example, when higher temperatures are used, the extraction time for an oil of low viscosity can be less than a minute, whereas, if the extraction is performed at room temperature, the time requirement for extraction of a polymeric plasticizer may be in the order of a half hour or even longer.

In the above combinations where olefinic polymers are used as the first and second polymer, it has been found that a high degree of porosity can be achieved when one uses an extractable material selected from the aromatic and aliphatic esters described above, especially from the dibutyl esters of phthalic acid and sebacatic acid. The extractable components can be present in from 30 and preferably from about 50 to about 70 wt. percent of each first and second polymeric composition.

Each first and second polymeric composition used to form an initial sheet product should be a composition which is suitable for each first and second ply of the final sheet product. Each composition is composed of a polymer having the desired viscosity and flow profile characteristics, as described above, and may also contain small amounts of the additives discussed earlier. The polymer compositions must be substantially inert with respect to the battery environment for which it is contemplated for use.

As indicated above, a second embodiment of this invention comprises imparting porosity by stretching and annealing the initial sheet product. Thus, in this embodiment the first polymer and the second polymer are the major component used to form a first ply and a second ply, respectively, of a sheet product. The initial sheet product need not contain an extractable component when using this second embodiment to form the subject sheet product.

Methods have been disclosed to produce single microporous sheets from corresponding single, uniform films by stretching and annealing the film. Such processes are disclosed in U.S. Patents 3,426,754; 3,558,764; 3,679,538; 3,801,404; 3,801,692; 3,843,761; and 4,138,459. The teachings of these references are expressly incorporated herein. The gist of the methods disclosed by the above references comprises the steps of subjecting an unstretched film to heat treatment, stretching the film at a temperature close to room temperature or a temperature in the range of between a temperature not lower than the second order transition temperature of the resin (for example, a temperature not lower than -40°C. in the case of polypropylene) and a temperature not higher than the temperature at which the partial melting of the crystalline phase begins to occur. Pores are generated and provide a porous body which is then stretched at a temperature in the range of between a temperature higher than the temperature at which the partial melting of the phase begins to occur and a temperature not higher than the crystalline melting point, and again conducting heat treatment to thermally fix the pores thus formed.

Another stretching process is described in U.S. Patents 4,539,256 and 4,726,989 in which the stretching is conducted at elevated temperatures with the aid of a nucleating agent in the sheet.

Still another stretching and annealing process for imparting microporosity to a single, uniform highly crystalline polymer sheet is disclosed in U.S. Patent 4,994,335, the teachings of which are incorporated herein by reference. In this method, the film is stretched under extremely low temperatures of from -198°C to -70°C and then subjected to heat fixation at a temperature of from 5 to 60°C below the melt temperature of the polymer. Alternately, the sheet is stretched at a rate of up to 10% per minute while maintained at a temperature of 10-60°C below the polymer's melting point and then subjecting the sheet to heat fixation, as described above.

Each of the above teachings directed to stretching techniques describe specific methods for imparting porosity to polymer sheets formed from a single polymer and of a one-ply simple sheet having uniform composition across its thickness. In the present invention, the initially formed multi-ply initial sheet product described above can be made microporous by subjecting the multi-ply initial sheet product to stretching and annealing, as described above. The temperature ranges used should be based on the polymer having the highest melting point of the first and second polymer compositions used to form the initial sheet product. However, the temperature of stretching and of annealing shall not be above 20°C below the transformation temperature of the first polymer composition.

The resultant sheet product of the present invention is a multi-ply product in which the first ply, although of a lower melting point polymer, will exhibit porosity as it is stretched and annealed along with the second ply's polymer composition.

The resultant sheet products have been found to be capable of exhibiting inhibition to dendrite growth, high conductivity at ambient temperatures, capability to be formed into a very thin sheet products, and stability to the environment produced by and components of the battery. In addition, the present sheet products are dimensionally stable and do not exhibit unacceptable and detrimental shrinkage in its length and breadth dimensions when subjected to elevated temperatures. The sheet product, therefore, when used as a separator does not permit contact of electrodes even at temperatures when conventional polyolefin separators would degrade and/or shrink.

The exact final composition of each ply forming the sheet product of the present invention whether formed by the first or second method embodiment descirbed above will depend on the original composition. Each ply exhibits microporosity. The size of the pores of the present sheet product have a substantial proportion which are less than of 0.5 micron diameter (Capillary Flow Porometry Method) and are generally tortuous in nature. It has been found that the microporosity can be further set in the structure of the final sheet product by subjecting the formed sheet product to uniaxial stretching. The stretching can be accomplished by varying the speed of the take-up roll subsequent to extraction. The stretching should be done at temperatures of from about 25°C to about 110°C and preferably from about 40°C to about 100°C. The stretching should be at a ratio of at least 1:1.05 and preferably from about 1:2 to about 1:4.

The sheet products formed by the present process have the ability to drastically reduce its degree of porosity while maintaining its length and breadth upon being subject to a predetermined elevated temperature. The reduced porosity causes a "shut-down" of the battery's electrical system by being a barrier to the passage of ions in the electrolyte between electrodes of opposite polarity. This "shut-down" ability can, in lithium batteries, act as a "safety switch" which in effect, turns off the circuit prior to harm being done through thermal runaway or explosion of the defective battery.

The following examples are given for illustrative purposes only and are not meant to be a limitation on the invention described herein and in the claims appended hereto. All parts and percentages given below are by weight unless otherwise stipulated.

### EXAMPLE 1

A mixture of 60% dibutyl sebacate and 40% high density polyethylene having a wt. average molecular weight of 127,000 was prepared by blending the components in an extruder at 200°C. The blend was then ground up using a grinder. A mixture of 60% dibutyl sebacate and 40% ethylene-butene (ca. 10% butene) copolymer having a wt. average molecular weight of 143,000 was also prepared in the same manner. The two grinds were coextruded using a blown film die at a temperature of 165°C to form a two layer film. The film was placed in 1,1,1-trichloroethane to extract the dibutyl sebacate. The extracted film was stretched (3:1) in the machine direction at a temperature of about 90°C.

The resultant microporous, two-ply film had a thickness of 0.0025 cm (1 mil) and exhibited an electrical resistivity of 49 ohm-cm in 35 wt. % sulfuric acid and a machine direction tensile strength of 12.8 MPa (1855 psi).
Subjecting this film to a temperature of 90°C did not affect the electrical resistivity. Subjecting this film to a temperature of 100°C caused the electrical resistance to rise above 1500 ohm-cm.

### EXAMPLE 2

The method of Example 1 was followed except that a three-layer film was prepared, the center layer containing the ethylene-butene copolymer.

This film had an electrical resistivity of 8.4 ohm-cm in 35 wt. % sulfuric acid and a machine direction tensile strength 10.3 MPa (1490 psi). Subjecting this film to a temperature of 90°C did not affect the electrical resistivity. Subjecting this film to a temperature of 100°C caused the electrical resistance to rise above 1500 ohm-cm.

### EXAMPLE 3

The method of Example 2 was repeated except that the center layer was formed using ethylene-butene copolymer (ca. 13% butene) having a weight average molecular weight of 152,000. The film had an electrical resistivity of 12 ohm-cm in 35 wt. % sulfuric acid and an average pore size of 0.23 µm (microns) The film showed a transition temperature at 110°c with an increase in electrical resistivity to above 1500 ohm-cm.

### EXAMPLE 4

The process of Example 1 is repeated except that a high molecular weight (about 500,000) predominantly isotactic polypropylene is used instead of the polyethylene and the dibutyl sebacate was replaced with dibutyl phthalate. A second sheet was made with a mixture of (52/8) dibutyl phthalate and hydrocarbon resin (Picotac of Hercules, M.P. of about 100°C) in the polypropylene ply while the ethylene-butene ply contained only dibutyl phthalate.

The resultant sheet products exhibit low electrical resistivity of less than 50 ohm-cm at temperatures of up to about 95°C. After exposure to 100°C, the resistivity is greater than 1500 ohm-cm.

### EXAMPLE 5

The process of Example 1 is repeated except that an ethylene-hexene (9:1) copolymer of 110,000 wt average molecular weight is used instead of the ethylene-butene copolymer

The resultant sheet exhibits low electrical resistivity up to about 120°C and then transforms to a high resistivity (>1500 ohm-cm) product when exposed to this higher temperature.

### EXAMPLE 6

The process of Examples 1 - 3 are repeated except that diisopryl sebacate is used instead of the sabacate. The results are substantially the same as reported above.

### EXAMPLE 7

A two ply sheet product is formed by co-extruding a high density polyethylene having a weight average molecular weight of 250,000 and a crystalinity of about 80 percent as one ply and an ethylene-butene (87-13) copolymer having a crystalinity of about 50 percent and a melting point of 110°C. The coextrusion is conducted using a blown film die at a temperature of 170°C to form a two-ply sheet product.

The resultant nonporous sheet product is stretched by 15 percent in one direction while in contact with liquid nitrogen. While maintaining the stretched state, the sheet product is heated to 90°C in an air oven for 5 minutes. The sheet is then heated at 80°C while stretching in the same direction as the initial stretch until stretched to about 150 percent. The sheet product is then annealed at 90°C for 1 hour.

### EXAMPLE 8

The process of Example 7 is repeated except that polypropylene of 65 percent crystalinity is used in place of the polyethylene of Example 7.

The microporous sheet product exhibits the same change in resistivity at 110°C.

### EXAMPLE 9

The process of Example 7 is repeated that the polyethylene further contains about 5 wt. percent fume silica as a nucleating agent.

The resultant sheet product exhibits a higher degree of porosity and also exhibits change in resistivity at 110°C.

### EXAMPLE 10

A three ply sheet product is formed by coextruding a mixture of 60 wt. % high density polyethylene: 40 wt. % mineral oil (outer layers) and a mixture of 60 wt. % ethylene-butene copolymer: 40 wt. % mineral oil for the middle layer. The coextrusion is conducted using a multimanifold film die at a temperature of 245°C onto a chill roll at 50°C. The film is extracted using 1,1,1 trichlomethane to remove mineral oil. The three-ply sheet product was then oriented in the machine direction (10:1).

The resultant product is a multi-ply microporous sheet product which has low resistivity at temperatures of up to 100°C and high resistivity of greater than 1500 ohm-cm when exposed to 100°C.

## Claims

1. A process of forming a microporous multi-ply sheet product comprising
a) forming a first polymer composition composed of an inert first polymer and a first extractable material which is miscible with the first polymer at processing temperatures;
b) forming a second polymer composition composed of an inert second polymer and a second extractable material which is miscible with the second polymer at processing temperatures; said first and second extractable materials being miscible in a common solvent;
c) forming an initial sheet product having at least one ply composed of the first polymer composition and at least one ply composed of the second polymer composition;
d) contacting the initial sheet product with the common solvent to substantially remove the first and second extractable materials therefrom; and
e) recovering a final sheet product having at least two plies comprising
1) at least one first ply in the form of a continuous microporous sheet of a length and breadth and of less than 0.025 cm (10 mils) thickness and having pores of an average pore size of from about 0.005 to 50µm in diameter occupying at least 20 volume percent of said sheet, said sheet composed of a substantially unfilled first polymer composition;
2) at least one second ply in the form of a continuous microporous sheet of substantially the same predetermined length and breadth dimensions as the first ply and of less than 0.025 cm (10 mils) thickness and having pores of an average of from about 0.005 to 50µm in diameter occupying at least about 20 volume percent of said sheet, said sheet composed of a substantially unfilled second polymer composition; each of said first and second ply being bonded together to provide a unitary sheet product which is microporous across its thickness and which is capable of maintaining its length and breadth dimension and the viscosity of the first polymer composition and the second polymer composition are ultra-high and substantially the same at a temperature of from ambient to about 70°C while, at a transformation temperature of from about 80°C to 150°C, said first polymer composition has a sufficient decrease in viscosity to exhibit flow sufficient to collapse the pores therein and cause first ply (a) to be substantially non-porous while said second polymer composition maintains its ultra-high viscosity for at least 10°C above the transformation temperature.

2. A process according to Claim 1, wherein the step c) is a coextrusion forming step.

3. A process according to Claim 2, wherein the extrusion forming step employs a multi-manifold internal combining die.

4. A process according to Claim 3, wherein the extrusion forming step is a blown film or cast film technique.

5. A process according to any one of Claims 1 to 4, wherein the inert first polymer is selected from low density polyethylene, copolymers of ethylene/butene or copolymers of ethylene/hexene.

6. A process according to any one of Claims 1 to 5, wherein the inert second polymer is elected from high density polyethylene, ultra-high molecular weight polyethylene or polypropylene.

7. A process according to any one of Claims 1 to 4, wherein the inert first polymer and inert second polymer are each selected from a polyolefin.

8. A process according to any one of Claims 1 to 7, wherein the extractable material is selected from an aromatic dicarboxylic acid C₃-C₅ alkyl ester or C₆-C₉ alkanyl dicarboxylic acid C₃-C₅ alkyl ester.

9. A process according to Claim 8, wherein the extractable material is selected from a C₃-C₅ alkyl ester of sebacatic acid, a C₃-C₅ alkyl ester of phthalic acid or a C₃-C₅ alkyl ester of isophthalic acid.

10. A process according to Claim 1, wherein the initial sheet product is formed by a coextrusion process of blown film or cast film technique; the first inert polymer is selected from low density polyethylene, copolymers of ethylene/butene or copolymers of ethylene-hexene; the second inert polymer is selected from high density polyethylene, ultra-high molecular weight polyethylene, polypropylene; and the extractable material is selected from a C₃-C₅ alkyl ester of phthalic acid, a C₃-C₅ alkyl ester of isophthalic acid or a C₃-C₅ alkyl ester of sebacatic acid.

11. A process according to Claim 10, wherein the recovery step (e) further includes stretching the sheet product to affix microporosity therein.

12. A sheet product formed according to any one of the processes of Claims 1,2 and 6 to 11.

13. A process of forming a microporous multi-ply sheet product comprising
a) forming a first polymer composition and a second polymer composition; each of said compositions composed of components which are substantially inert with respect to a battery's environment for which said sheet product will be used;
b) forming an initial sheet product having at least one first ply composed of the first polymer composition and at least one second ply composed of the second polymer composition; wherein each of said first ply and said second ply are coextensive in length and breadth and are bonded together, and said first polymer composition exhibits a viscosity profile such that its viscosity is ultra high and substantially the same as that of the second polymer composition at temperatures of up to about 80°C and has a decrease in viscosity to exhibit flow sufficient to collapse the pores therein at a transformation temperature within the range of from about 80°C to 150°C while the second polymer composition maintains its ultra high viscosity for at least 10°C above said transformation temperature;
c) imparting porosity to the initial sheet by subjecting said initial sheet to stretching and annealing; and
d) recovering a final sheet product having at least two plies comprising
1) at least one first ply in the form of a continuous microporous sheet of a predetermined length and breadth of less than 0.025 cm (10 mils) thickness and having pores of an average pore size of from about 0.005 to 50µm in diameter occupying at least about 20 volume percent of said sheet, said sheet composed of a substantially unfilled first polymer composition;
2) at least one second ply in the form of a continuous microporous sheet of a length and breadth and of less than 0.025cm (10 mils) thickness and having pores of an average pore size of from about 0.005 to 50µm in diameter occupying at least about 20 volume percent of said sheet, said sheet composed of a substantially unfilled second polymer composition; each of said first and second ply being bonded together to provide a unitary sheet product which is microporous across its thickness and which is capable of maintaining its length and breadth dimension.

14. A process according to Claim 13, wherein the porosity is imparted to the initial sheet product by stretching the initial sheet product at a temperature between the second order transition temperature of the second polymer and the melt temperature of the first polymer and while maintained in a stretched state heat annealing the initial sheet product.

15. A process according to Claim 13, wherein the porosity is imparted to the initial sheet product by uniaxially stretching the initial sheet product from 1 to 200% based on initial sheet product dimension at a low temperature of from -198°C to -70°C and then heating the stretched sheet while maintained in a stretched state to a temperature of from 5 to 60°C lower than the melt temperature of the first polymer.

16. A process according to Claim 13, wherein the first and second polymer compositions contain a minor component selected from hydrocarbon oil or solid particulate and the porosity imparting step further comprises, after stretching, the removal of said minor component.

17. A process according to any one of claims 13 to 16, wherein the first polymer is selected from a copolymer of ethylene and a C₄-C₁₀ alpha-olefins.

18. A process according to any one of claims 13 to 16, wherein the first polymer is selected from ethylene-butene copolymers, ethylene-hexene copolymers, ethylene-methacrylate copolymers and polyethylene and the second polymer is selected from polyethylene and polypropylene.

19. A process according to any one of claims 1 to 11 or 13 to 18 wherein the first polymer composition is composed of a copolymer selected from ethylene-butene and ethylene-hexene.

20. A process according to any one of claims 1 to 11 or 13 to 19 wherein the second polymer composition is composed of a polymer selected from polyethylene or polypropylene.

21. A process according to any of claims 1 to 11 or 13 to 20 wherein the pore volume of each first ply and of each second ply is at least about 50 percent.

22. A microporous multi-ply sheet product obtainable by a process as defined in any one of claims 1 to 11 or 13 to 21.

23. The use as a battery separator of a product according to claim 22.

## Patentansprüche

1. Ein Verfahren zur Herstellung eines mikroporösen, mehrschichtigen scheibenförmigen Produktes, das
a) die Herstellung einer ersten Polymer-Verbindung, die sich aus einem ersten inerten Polymer und einem ersten extrahierbaren Stoff, der mit dem ersten inerten Polymer bei Reaktionstemperatur mischbar ist, zusammensetzt;
b) die Herstellung einer zweiten Polymer-Verbindung, die sich aus einem zweiten inerten Polymer und einem zweiten extrahierbaren Stoff, der mit dem zweiten Polymer bei Reaktionstemperatur mischbar ist, zusammensetzt, wobei die ersten und zweiten extrahierbaren Stoffe mit einem üblichen Lösungsmittel mischbar sind;
c) die Herstellung eines scheibenförmigen Ausgangsproduktes, das mindestens eine Schicht aufweist, die aus der ersten Polymer-Verbindung besteht, und mindestens eine Schicht aufweist, die aus der zweiten Polymer-Verbindung besteht;
d) das Versetzen des scheibenförmigen Ausgangsproduktes mit dem üblichen Lösungsmittel, um die ersten und zweiten extrahierbaren Stoffe weitgehend daraus zu entfernen; und
e) die Rückgewinnung eines scheibenförmigen Endproduktes, das mindestens zwei Schichten aufweist, die
1) mindestens eine erste Schicht in Form einer durchgehend mikroporösen Scheibe mit einer bestimmten Länge und Breite und einer Dicke von weniger als 0.025 cm (10 mils), die Poren mit einer mittleren Porengröße von 0.005 bis 50 µm im Durchmesser aufweist, die mindestens 20 Volumenprozent dieser Schicht ausmachen, wobei die Schicht aus einer weitgehend ungefüllten ersten Polymer-Verbindung besteht; und
2) mindestens eine zweite Schicht in Form einer durchgehend mikroporösen Scheibe mit den weitgehend gleichen vorgegebenen Dimensionen in Länge und Breite wie die erste Schicht und einer Dicke von weniger als 0.025 cm (10 mils), die Poren mit einem mittleren Durchmesser von 0.005 bis 50 µm aufweist, die mindestens ca. 20 Volumenprozent dieser Schicht ausmachen, wobei die Schicht aus einer weitgehend ungefüllten zweiten Polymer-Verbindung besteht; jede einzelne dieser ersten und zweiten Schichten sind miteinander verbunden, um ein einheitliches scheibenförmiges Produkt zu ergeben, welches quer über seine Schichtdicke mikroporös vorliegt und in der Lage ist, die Dimension seiner Länge und Breite aufrechtzuerhalten, wobei die Viskosität der ersten und der zweiten Polymer-Verbindung extrem hoch und bei einer Temperatur zwischen Raumtemperatur und ca. 70 °C weitgehend gleich ist, während bei einer Umwandlungstemperatur von ca. 80 °C bis 150 °C die erste Polymer-Verbindung eine ausreichende Abnahme der Viskosität aufweist, um ein für den Zusammenbruch der darin vorhandenen Poren ausreichendes Fließverhalten zu zeigen und zu bewirken, dass die erste Schicht (a) weitgehend nicht-porös vorliegt, während die zweite Polymer-Verbindung ihre extrem hohe Viskosität bis mindestens 10 °C über die Umwandlungstemperatur hinaus behält,
umfassen;
umfasst.

2. Ein Verfahren gemäß Anspruch 1, bei dem der Schritt c) ein Koextrusions-Formgebungsschritt ist.

3. Ein Verfahren gemäß Anspruch 2, bei dem für den Extrusions-Formgebungsschritt eine multi-funktionelle innere Kombinationsmatrize eingesetzt wird.

4. Ein Verfahren gemäß Anspruch 3, wobei es sich bei dem Extrusions-Formgebungsschritt um eine Blasfolien- oder Gießfolien-Technik handelt.

5. Ein Verfahren gemäß einem der Ansprüche 1 bis 4, bei dem das inerte erste Polymer ausgewählt ist aus der Gruppe Polyäthylen mit niedriger Dichte, Kopolymere von Äthylen/Buten oder Kopolymere von Äthylen/Hexen.

6. Ein Verfahren gemäß einem der Ansprüche 1 bis 5, bei dem das inerte zweite Polymer ausgewählt ist aus der Gruppe Polyäthylen mit hoher Dichte, Polyäthylen mit extrem hohem Molekulargewicht oder Polypropylen.

7. Ein Verfahren gemäß einem der Ansprüche 1 bis 4, bei dem das inerte erste Polymer und das inerte zweite Polymer jeweils aus der Gruppe der Polyolefine ausgewählt sind.

8. Ein Verfahren gemäß einem der Ansprüche 1 bis 7, bei dem der extrahierbare Stoff ausgewählt ist aus der Gruppe aromatischer Dicarbonsäure-(C₃-C₅)-alkylester oder (C₃-C₅)-Alkanyl-dicarbonsäure-(C₃-C₅)-alkylester.

9. Ein Verfahren gemäß Anspruch 8, bei dem der extrahierbare Stoff ausgewählt ist aus der Gruppe (C₃-C₅)-Alkylester der Sebacinsäure oder (C₃-C₅)-Alkylester der Isophthalsäure.

10. Ein Verfahren gemäß Anspruch 1, bei dem das scheibenförmige Ausgangsprodukt durch ein Koextrusions-Verfahren nach der Blasfolien- oder Gießfolien-Technik hergestellt wird; das erste inerte Polymer aus der Gruppe Polyäthylen mit niedriger Dichte, Kopolymere von Äthylen/Buten oder Kopolymere von Äthylen/Hexen ausgewählt ist; das zweite inerte Polymer aus der Gruppe Polyäthylen mit hoher Dichte, Polyäthylen mit extrem hohem Molekulargewicht oder Polypropylen; und der extrahierbare Stoff aus der Gruppe (C₃-C₅)-Alkylester der Phthalsäure, (C₃-C₅)-Alkylester der Isophthalsäure oder (C₃-C₅)-Alkylester der Sebacinsäure ausgewählt ist.

11. Ein Verfahren gemäß Anspruch 10, bei dem der Rückgewinnungsschritt e) zusätzlich das Strecken des scheibenförmigen Produktes einschließt, um die Mikroporosität darin zu fixieren.

12. Ein scheibenförmiges Produkt, hergestellt nach einem der Verfahren gemäß den Ansprüchen 1, 2 und 6 bis 11.

13. Ein Verfahren zur Herstellung eines mehrschichtigen, mikroporösen scheibenförmigen Produktes, das
a) die Herstellung einer ersten und einer zweiten Polymer-Verbindung, wobei jede dieser Verbindungen aus Komponenten besteht, die weitgehend inert in Bezug auf die Umgebung einer Batterie, für die das scheibenförmige Produkt eingesetzt wird, sind;
b) die Herstellung eines scheibenförmigen Ausgangsproduktes, das mindestens eine Schicht, die aus der ersten Polymer-Verbindung besteht, und mindestens eine Schicht, die aus der zweiten Polymer-Verbindung besteht, besitzt, wobei jede einzelne dieser ersten und zweiten Schichten die gleiche Ausdehnung in Länge und Breite besitzt und die Schichten miteinander verbunden sind und die erste Polymer-Verbindung ein Viskositäts-Profil in der Form zeigt, dass ihre Viskosität bei Temperaturen bis zu ca. 80 °C sehr hoch und weitgehend gleich der der zweiten Polymer-Verbindung ist und dass sie eine Abnahme der Viskosität aufweist, um bei einer Umwandlungstemperatur in dem Bereich von ca. 80 °C bis 150 °C ein für den Zusammenbruch der Poren ausreichendes Fließverhalten zu zeigen, während die zweite Polymer-Verbindung ihre extrem hohe Viskosität bis mindestens 10 °C über diese Umwandlungstemperatur hinaus behält;
c) die Vermittlung einer Porosität für die Ausgangsscheibe dadurch, dass man sie einer Streck- und Glühbehandlung aussetzt; und
d) die Rückgewinnung eines scheibenförmigen Endproduktes, das mindestens zwei Schichten aufweist, die
1) mindestens eine erste Schicht in Form einer durchgehend mikroporösen Scheibe mit einer vorgegebenen Länge und Breite und einer Dicke von weniger als 0.025 cm (10 mils), die Poren mit einer mittleren Porengröße von 0.005 bis 50 µm im Durchmesser, die mindestens 20 Volumenprozent dieser Schicht ausmachen, aufweist, wobei die Schicht aus einer weitgehend ungefüllten ersten Polymer-Verbindung besteht;
2) mindestens eine zweite Schicht in Form einer durchgehend mikroporösen Scheibe mit einer bestimmten Länge und Breite und einer Dicke von weniger als 0.025 cm (10 mils), die Poren mit einem mittleren Durchmesser von 0.005 bis 50 µm, die mindestens ca. 20 Volumenprozent dieser Schicht ausmachen, aufweist, wobei die Schicht aus einer weitgehend ungefüllten zweiten Polymer-Verbindung besteht; jede einzelne dieser ersten und zweiten Schichten miteinander verbunden sind, um ein einheitliches scheibenförmiges Produkt zu ergeben, welches quer über seine Schichtdicke mikroporös vorliegt und in der Lage ist, die Dimension seiner Länge und Breite aufrechtzuerhalten,
umfassen;
umfasst.

14. Ein Verfahren gemäß Anspruch 13, bei dem die Porosität dem scheibenförmigen Ausgangsprodukt durch Strecken des scheibenförmigen Ausgangsproduktes bei einer Temperatur zwischen dem zweiten Wert der Umwandlungstemperatur der zweiten Polymer-Verbindung und der Schmelztemperatur der ersten Polymer-Verbindung sowie durch eine Glühbehandlung des scheibenförmigen Ausgangsproduktes, bei der es im gestreckten Zustand gehalten wird, vermittelt wird.

15. Ein Verfahren gemäß Anspruch 13, bei dem die Porosität dem scheibenförmigen Ausgangsprodukt durch uniaxiales Strecken des scheibenförmigen Ausgangsproduktes bei einer tiefen Temperatur von -198 °C bis -70 °C von 1 auf 200 %, bezogen auf die Dimension des scheibenförmigen Ausgangsproduktes, und anschließendes Aufheizen der gestreckten Scheibe auf eine Temperatur von 5 bis 60 °C unterhalb des Schmelzpunktes der ersten Polymer-Verbindung, wobei die Scheibe im gestreckten Zustand gehalten wird, vermittelt wird.

16. Ein Verfahren gemäß Anspruch 13, bei dem die ersten und zweiten Polymer-Verbindungen einen Nebenbestandteil, ausgewählt aus der Gruppe ölförmige oder fest anfallende Kohlenwasserstoffverbindungen, enthalten und der die Porosität vermittelnde Schritt nach dem Strecken zusätzlich die Entfernung dieses Nebenbestandteils umfasst.

17. Ein Verfahren gemäß einem der Ansprüche 13 bis 16, bei dem das erste Polymer aus der Gruppe Kopolymere des Äthylens und (C₄-C₁₀)-alpha-Olefine ausgewählt ist.

18. Ein Verfahren gemäß einem der Ansprüche 13 bis 16, bei dem das erste Polymer aus der Gruppe Äthylen/Buten-Kopolymere, Äthylen/Metacrylat-Kopolymere und Polyäthylen und das zweite Polymer aus der Gruppe Polyäthylen und Polypropylen ausgewählt ist.

19. Ein Verfahren gemäß einem der Ansprüche 1 bis 11 oder 13 bis 18, bei dem die erste Polymer-Verbindung aus einem Kopolymer besteht, das aus der Gruppe Äthylen/Buten und Äthylen/Hexen ausgewählt ist.

20. Ein Verfahren gemäß einem der Ansprüche 1 bis 11 oder 13 bis 19, bei dem die zweite Polymer-Verbindung aus einem Polymer besteht, das aus der Gruppe Polyäthylen oder Polypropylen ausgewählt ist.

21. Ein Verfahren gemäß einem der Ansprüche 1 bis 11 oder 13 bis 20, bei dem das Porenvolumen jeder einzelnen ersten und jeder einzelnen zweiten Schicht mindestens ca. 50 Prozent beträgt.

22. Ein mikroporöses, mehrschichtiges scheibenförmiges Produkt, erhältlich nach einem Verfahren, beschrieben in einem der Ansprüche 1 bis 11 oder 13 bis 21.

23. Die Verwendung eines Produktes gemäß Anspruch 22 als Batterie-Separator.

## Revendications

1. Procédé de formation d'un produit sous la forme d'une feuille multicouche microporeuse, comprenant les étapes consistant à :
a) former une première composition polymère composée d'un premier polymère inerte et d'une première matière extractible qui est miscible avec le premier polymère aux températures de traitement ;
b) former une seconde composition polymère composée d'un second polymère inerte et d'une seconde matière extractible qui est miscible avec le second polymère aux températures de traitement ; lesdites première et seconde matières extractibles étant miscibles dans un solvant commun ;
c) former un produit initial sous la forme d'une feuille ayant au moins une couche composée de la première composition polymère et au moins une couche composée de la seconde composition polymère ;
d) amener le produit initial sous la forme d'une feuille au contact du solvant commun pour éliminer sensiblement les première et seconde matières extractibles de celui-ci ; et
e) recueillir un produit final sous la forme d'une feuille ayant au moins deux couches, comprenant :
1) au moins une première couche sous la forme d'une feuille microporeuse continue d'une longueur et d'une largeur prédéterminées et de moins de 0,025 cm (10 *mils*) d'épaisseur et ayant des pores d'une dimension moyenne d'environ 0,005 à 50 µm de diamètre et occupant au moins 20 % en volume de ladite feuille, ladite feuille étant composée d'une première composition polymère sensiblement non chargée ;
2) au moins une seconde couche sous la forme d'une feuille microporeuse continue ayant sensiblement les mêmes dimensions prédéterminées de longueur et de largeur que la première couche et une épaisseur de moins de 0,025 cm (10 *mils*) et ayant des pores d'un diamètre moyen d'environ 0,005 à 50 µm, occupant au moins environ 20 % de ladite feuille, ladite feuille étant composée d'une seconde composition polymère sensiblement non chargée ;
chacune desdites première et seconde couches étant assemblées pour fournir un produit sous la forme d'une feuille unitaire qui est microporeuse à travers son épaisseur et qui est capable de conserver ses dimensions en longueur et en largeur, et la viscosité de la première composition polymère ainsi que la viscosité de la seconde composition polymère sont très élevées et sensiblement identiques à une température comprise entre la température ambiante et environ 70°C, tandis qu'à une température de transformation d'environ 80°C à 150°C, ladite première composition polymère présente une diminution suffisante de sa viscosité pour présenter un écoulement suffisant pour aplatir les pores dans celle-ci et amener la première couche (a) à être sensiblement non poreuse, tandis que la seconde composition polymère conserve sa viscosité très élevée jusqu'à une température située au moins 10°C au-dessus de la température de transformation.

2. Procédé selon la revendication 1, dans lequel l'étape c) est une étape de formation par coextrusion.

3. Procédé selon la revendication 2, dans lequel l'étape de formation par extrusion emploie une filière mélangeuse interne à plusieurs collecteurs.

4. Procédé selon la revendication 3, dans lequel l'étape de formation par extrusion est une technique de formation de film soufflé ou de film coulé.

5. Procédé selon l'une quelconque des revendications 1 à 4, dans lequel le première polymère inerte est choisi parmi un polyéthylène de faible densité, des copolymères d'éthylène/butène ou des copolymères d'éthylène/hexène.

6. Procédé selon l'une quelconque des revendications 1 à 5, dans lequel le second polymère inerte est choisi parmi un polyéthylène de densité élevée, un polyéthylène ou un polypropylène de poids moléculaire très élevé.

7. Procédé selon l'une quelconque des revendications 1 à 4, dans lequel le premier polymère inerte et le second polymère inerte sont choisis chacun parmi des polyoléfines.

8. Procédé selon l'une quelconque des revendications 1 à 7, dans lequel la matière extractible est choisie parmi un ester d'alkyle en C₃-C₅ et d'un acide dicarboxylique aromatique ou un ester d'alkyle en C₃-C₅ et d'un acide alkanyldicarboxylique.

9. Procédé selon la revendication 8, dans lequel la matière extractible est choisie parmi un ester d'alkyle en C₃-C₅ et d'acide sébacique, un ester d'alkyle en C₃-C₅ et d'acide phtalique ou un ester d'alkyle en C₃-C₅ et d'acide isophtalique.

10. Procédé selon la revendication 1, dans lequel le produit initial sous la forme d'une feuille est formé au moyen d'un procédé de coextrusion selon une technique de formation de film soufflé ou de film coulé ; le premier polymère inerte est choisi parmi un polyéthylène de faible densité, des copolymères d'éthylène/butène ou des copolymères d'éthylène/hexène ; le second polymère inerte est choisi parmi un polyéthylène de densité élevée, un polyéthylène ou un polypropylène de poids moléculaire très élevé ; et la matière extractible est choisie parmi un ester d'alkyle en C₃-C₅ et d'acide phtalique, un ester d'alkyle en C₃-C₅ et d'acide isophtalique ou un ester d'alkyle en C₃-C₅ et d'acide sébacique.

11. Procédé selon la revendication 10, dans lequel l'étape de récupération (e) comprend, en outre, l'étirage du produit sous la forme d'une feuille pour fixer la micro-porosité dans celle-ci.

12. Produit sous la forme d'une feuille formé selon l'un quelconque des procédés des revendications 1, 2 et 6 à 11.

13. Procédé de formation d'un produit sous la forme d'une feuille microporeuse multicouche, comprenant les étapes consistant à :
a) former une première composition polymère et une seconde composition polymère, chacune desdites compositions étant composée de composants qui sont sensiblement inertes vis-à-vis de l'environnement d'une batterie dans laquelle ledit produit sous la forme d'une feuille doit être utilisé ;
b) former un produit initial sous la forme d'une feuille, ayant au moins une première couche composée de la première composition polymère et au moins une seconde couche composée de la seconde composition polymère ; dans lequel chacune desdites première et seconde couches ont une longueur et une largeur coextensives et sont assemblées, et ladite première composition polymère présente un profil de viscosité tel que sa viscosité est très élevée et sensiblement identique à celle de la seconde composition polymère à des températures allant jusqu'à environ 80°C et présente une diminution de sa viscosité pour présenter un écoulement suffisant pour aplatir les pores dans celle-ci à une température de transformation comprise entre environ 80°C et 150°C, tandis que la seconde composition polymère conserve sa viscosité très élevée jusqu'à une température située au moins 10°C au-dessus de ladite température de transformation ;
c) conférer une porosité à la feuille initiale en soumettant ladite feuille initiale à un étirage et à un recuit ; et
d) recueillir un produit final sous la forme d'une feuille ayant au moins deux couches, comprenant :
1) au moins une première couche sous la forme d'une feuille microporeuse continue ayant une longueur et une largeur prédéterminées et une épaisseur de moins de 0,025 cm (10 *mils*) et ayant des pores d'un diamètre moyen d'environ 0,005 à 50 µm, occupant au moins environ 20 % en volume de ladite feuille, ladite feuille étant composée d'une première composition polymère sensiblement non chargée ;
2) au moins une seconde couche sous la forme d'une feuille microporeuse continue ayant une longueur et une largeur prédéterminées et une épaisseur de moins de 0,025 cm (10 *mils*) et ayant des pores d'un diamètre moyen de 0,005 à 50 µm, occupant au moins environ 20 % en volume de ladite feuille, ladite feuille étant composée d'une seconde composition polymère sensiblement non chargée ;
lesdites première et seconde couches étant assemblées pour fournir un produit sous la forme d'une feuille unitaire qui est microporeuse à travers son épaisseur et qui est capable de conserver ses dimensions en longueur et en largeur.

14. Procédé selon la revendication 13, dans lequel on confère la porosité au produit initial sous la forme d'une feuille en étirant ledit produit initial sous la forme d'une feuille à une température comprise entre la température de transition du deuxième ordre du second polymère et la température de fusion du premier polymère et en soumettant le produit initial sous la forme d'une feuille à un recuit à la chaleur tout en le maintenant dans un état étiré.

15. Procédé selon la revendication 13, dans lequel on confère la porosité au produit initial sous la forme d'une feuille par étirage uniaxial du produit initial sous la forme d'une feuille à raison de 1 à 200 % par rapport à la dimension du produit initial sous la forme d'une feuille, à une basse température comprise entre -198°C et -70°C, et ensuite par chauffage de la feuille étirée, tout en maintenant celle-ci dans un état étiré, à une température comprise entre 5 et 60°C au-dessous de la température de fusion du premier polymère.

16. Procédé selon la revendication 13, dans lequel les première et seconde compositions polymères contiennent un composant secondaire choisi parmi une huile hydrocarbonée ou des particules solides, et l'étape conférant la porosité comprend, en outre, l'élimination dudit composant secondaire après l'étirage.

17. Procédé selon l'une quelconque des revendications 13 à 16, dans lequel on choisit le premier polymère parmi un copolymère d'éthylène et d'une alpha-oléfine en C₄-C₁₀.

18. Procédé selon l'une quelconque des revendications 13 à 16, dans lequel on choisit le premier polymère parmi des copolymères d'éthylène-butène, des copolymères d'éthylène-hexène, des copolymères d'éthylène-méthacrylate et le polyéthylène, et on choisit le second polymère parmi le polyéthylène et le polypropylène.

19. Procédé selon l'une quelconque des revendications 1 à 11 ou 13 à 18, dans lequel la première composition polymère est composée d'un copolymère choisi parmi des copolymères d'éthylène-butène et d'éthylène-hexène.

20. Procédé selon l'une quelconque des revendications 1 à 11 ou 13 à 19, dans lequel la seconde composition polymère est composée d'un polymère choisi parmi le polyéthylène et le polypropylène.

21. Procédé selon l'une quelconque des revendications 1 à 11 ou 13 à 20, dans lequel le volume de pores de chacune des première et seconde couches est d'au moins environ 50 %.

22. Produit sous la forme d'une feuille microporeuse multicouche qu'on peut obtenir au moyen d'un procédé tel que défini dans l'une quelconque des revendications 1 à 11 ou 13 à 21.

23. Utilisation d'un produit selon la revendication 22 en tant que séparateur pour batterie.
